# EUROPEAN PATENT APPLICATION

(11) **EP 2 204 354 A2**
(43) Date of publication of application: **07.07.2010**
(21) Application number: 09252858.7
(22) Date of filing: 22.12.2009
(51) Int. Cl.: C03B 27/04, C03B 29/08

(54) **Flame polishing of flat glass**

(30) Priority: 30.12.2008 US 141467 P; 20.03.2009 US 407989
(71) Applicant: Linde LLC, Murray Hill, NJ 07974 (US)
(72) Inventor: Carney, Stephen, 81245 München (DE); Mieth, Rainer, 85591 Vaterstetten (DE); Richardson, Andrew, Clinton, NJ 08809 (US)
(74) Representative: Wickham, Michael

(57) **Abstract**

A method and apparatus are provided to flame polish a thin glass sheet which includes cooling the thin glass sheet followed by heating the thin glass sheet with an intense flame to substantially reduce if not eliminate surface roughness of the glass sheet.

## Description

The present inventive embodiments relate to polishing a glass sheet with heat.

Typically, flat sheet glass is made by one of two processes: a float glass or a rolled glass process. Float glass is formed by floating molten glass on a bath of molten tin and typically has a higher surface quality than rolled glass. Rolled glass is formed by passing glass between a series of rollers. As there is physical contact between the glass and the rollers in the rolled glass process, there is the propensity for the glass surface to be marred, distorted or imprinted. The surface quality of glass sheets formed by the rolled glass process is not suitable for the manufacture of photovoltaic used in solar panels.

One method of manufacturing display glass, e.g. liquid crystal display (LCD) or plasma display panel (PDP) glass, is by a float glass process. A thin (∼0.5 - 0.8mm thick) glass sheet is formed by the process of floating molten glass on a bath of molten tin. The glass sheet is then fed through a lehr to carefully cool the glass prior to cutting and polishing the sheet. The lehr is a long, heated oven through which the glass sheet moves so gradual cooling will properly anneal and remove stress from the glass. A mechanical polishing stage follows, which is an expensive, but essential, large-scale operation that contributes significantly to the cost of the final glass product and is responsible for a significant amount of product loss. The purpose of polishing LCD or PDP glass is to reduce roughness of the separate glass sheets, so that when they are placed together they form a useable LCD or PDP display. Any roughness remaining on the individual sheets creates uneven distribution of liquid crystals. This uneven crystal distribution creates differences in the color of the LCD cell and hence impacts product quality and usability.

According to the present invention there is provided apparatus for polishing a glass sheet, comprising a cooling assembly disposed in a vicinity of the glass sheet and having a discharge member for discharging a cooling fluid medium to contact a surface of the glass sheet, and a heating assembly disposed for discharging heat for a selected amount of time to heat the surface of the glass sheet to a depth not more than one-third of the thickness of the glass sheet.

The invention also provides a method for polishing a glass sheet, comprising:
cooling a surface of the glass sheet with a cooling fluid medium directed to the surface of the glass sheet for a first amount of time, and heating the surface of the glass sheet to a depth not more than one-third of the thickness of the glass sheet for a second amount of time.

The method and apparatus according to the invention eliminate the need for a tin bath to produce high quality sheet glass for PV applications and substantially reduce if not eliminate the need for mechanical polishing of a glass sheet for display panel manufacture.

The method and apparatus according to the invention are able to apply high intensity flame polishing (or "fire-polishing") to a moving glass sheet. The flame polishing typically involves the direct impingement of intense high temperature flames onto the glass surface. The application of the high temperature flame causes the surface layer of the glass to become molten and flow so as to reduce visible and microscopic surface roughness and imperfections. It is important to control the amount of heat transferred to the underlying bulk of the glass sheet so that the bulk glass temperature does not approach the softening point of the glass and thereby cause sagging of the sheet. Were the softening point to be reached, the glass sheet could deform and stripes also may be created in the sheet as it moves through the flame.

A surface layer of the glass sheet is typically heated, as rapidly as possible so as to minimize heat transfer into the bulk of the glass sheet below the sheet's surface. As the flame is applied to the surface of the glass sheet, heat begins to penetrate into the bulk of the glass sheet moving away from the heated surface. By employing rapid heating it is possible to achieve a suitably non-uniform temperature distribution within the glass sheet. The method and apparatus according to the invention make it possible to heat the surface of the glass sheet with a high intensity flame so that heat penetrates into the glass to a depth at which the heated surface of the glass sheet is molten and only up to one-third (1/3^{rd}) of the glass sheet thickness is above its softening point, with the remaining bulk glass strong enough to resist softening. For example, heat is applied to the surface of the sheet for a total period of 0.5 - 4 seconds, i.e., depending on its size, it takes an entire sheet from 0.5 to 4 seconds in which to traverse the flame.

The rate of heating the surface of the glass sheet is controlled by the nature of the flame impinging the glass sheet, including the flame temperature, composition and velocity. Heat transfer rates have been determined for a range of flames and increase in the order oxy-methane tip-mixed; oxy-hydrogen tip-mixed; oxy-methane premixed; and oxy-hydrogen premixed.

The term "tip-mixed" refers to the fuel and oxidant coming into contact only at a tip of the burner; also referred to as a diffusion flame. The flame forms at an interface of regions where the fuel and oxidant come together and so the rate of reaction is affected by the rates of mixing and not just the chemical kinetics.

The term "premixed" means that the fuel and oxidant are mixed together into a flammable mixture. In this case, as the reactants are already intermingled at the molecular scale, the formation of the flame is largely dependent on the chemical kinetics; i.e. once a flame is initiated it moves as a wave through the reactive mixture. The speed at which the wave or flame front moves is very much dependent on local composition, temperature, pressure and turbulence. In a jet type flame, the flame front is located where the local burning velocity (how fast the wave propagates) is equal to the local velocity. Premixed flames are more intense than diffusion (tip-mixed) flames and accordingly lead to a higher heat flux. Oxy-hydrogen flames have higher flame speeds than oxy-methane flames and lead to higher heat fluxes. The heat transfer rates increase from oxy-methane tip-mixed to oxy-hydrogen tip mixed to oxy-methane premixed to oxy-hydrogen premixed.

As the intent is to soften only the heated side of the glass sheet which is relatively thin (approximately 2.8-5 mm thick) and in particular as a sheet of LCD/PDP glass is very thin (∼0.5 - 0.8mm thick), a high intensity, premixed, oxy-hydrogen flame is preferred over other types of flames in order to address issues of softening and deformation. Such other types of flames such as premixed oxygen + methane\butane\propane\acetylene or substantive blends thereof with hydrogen, would be suitable for thicker glass sheets where a lower intensity flame would be acceptable. In order to allow the surface to melt and the bulk glass below the surface to remain below its softening point, the system embodiments cool the glass sheet before the application of the flame polishing.

Flame polishing by the method and apparatus according to the invention may occur between a glass furnace and a lehr so that final stress removal of the sheet can take place. Polishing can take place in general between the furnace and the lehr. The glass may be polished when it is as hot as possible in order to save energy but cold enough to maintain its shape. The minimum temperature for glass to be polished normally is above 500°C. It might be possible to integrate the polishing into a front part of the lehr (if no space is available), as well as directly at an outlet of the furnace, when the glass has the required temperature (500 - 550°C). A short distance to the lehr is preferred, to prevent glass from breaking by thermal shock as the polishing can increase tensile forces within the glass. Furthermore, it has been found that the glass plate should be supported after flame polishing to ensure that as the thermal distribution within the plate equalizes and the heat within the glass plate penetrates to a greater depth, that the plate will not sag during this post heating stage. It has been found that supporting the plate on a ceramic plate will provide the necessary support during the process. The cooling also helps to prevent sagging post-heating.

The method and apparatus according to the present invention will now be described by way of example with reference to the accompanying drawings, in which:
Figure 1 shows a system for flame polishing of glass;
Figure 2 shows other features of the system of Figure 1; and
Figure 3 shows a graph of heat transfer with respect to types of flames.

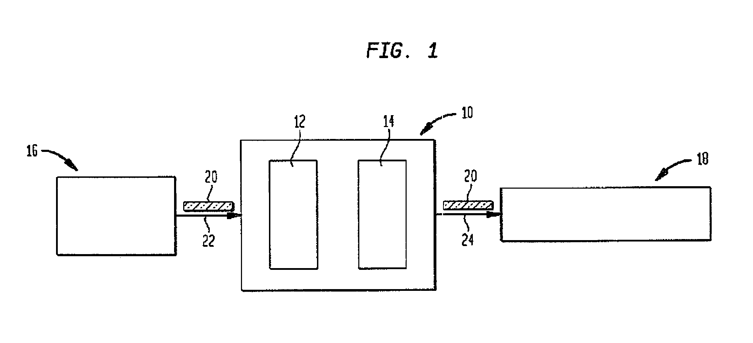

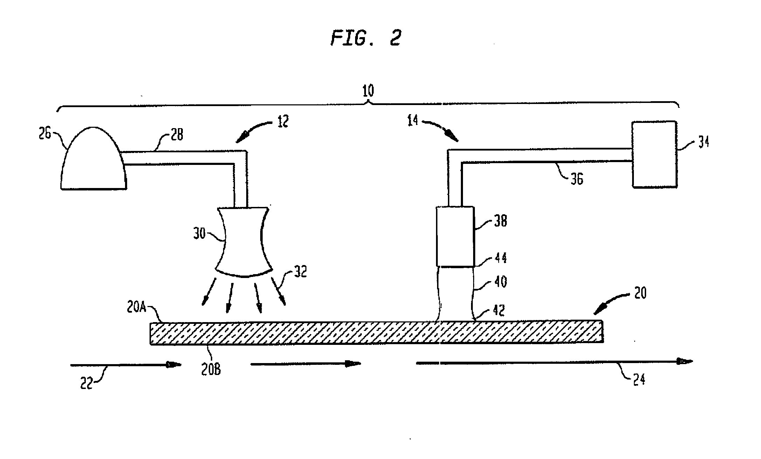

Referring to Figures 1 and 2, there is shown an apparatus 10 according to the present invention for flame polishing a glass sheet or sheets 20 such as for example a thin glass sheet. System 10 includes a cooling assembly 12 and a heating assembly 14 for use upon the glass sheet 20, the glass sheet having opposed surfaces 20A, 20B.

The system 10 is disposed between a melter shown generally at 16, which can be for example a glass melting furnace, and a lehr 18 disposed at a downstream end of the glass sheet 20 processing. Transport assembly conveyors shown generally at 22, 24 transport the glass sheet 20 from the melter 16 to the apparatus 10 (cooling assembly 12 and heating assembly 14), and from the apparatus10 to the lehr 18, respectively. The conveyors 22, 24 can include rollers, a mesh belt, conveyer belts, moving beds, moving plates such as for example a ceramic plate, etc. The transport mechanism needs to be of such construction that it can withstand the elevated temperatures generated in the system 10 and during support of the flame heated sheet 20. One embodiment to transport the glass sheet 20 includes a smooth ceramic plate which provides uniform support for the sheet in order to minimize mechanical stresses in the sheet.

As shown in Figure 2, the glass sheet 20 upon entry into the system 10 has a surface 20A thereof exposed to the cooling assembly 12 and thereafter to the heating assembly 14.

The cooling assembly 12 consists of a source 26 of a cooling fluid connected by a conduit 28 to a cooling discharge assembly 30. The source 26 of the cooling fluid may include air or a cryogen, such as nitrogen or carbon dioxide gas. The conduit 12 is connected to the discharge assembly 30 which preferably is a nozzle or other atomizer discharge member for dispersing the cooling medium in a uniform, even flow along the surface 20A of the glass sheet 20. The cooling discharge assembly 30 provides as uniformly as possible a flow of cooling medium onto the glass surface 20A. Cooling is performed uniformly, for the glass sheet being heated at a uniform temperature and as such reaches a uniform temperature across its upper surface 20A. Deviations in the thermal treatment of the upper surface 20A would lead to differential stresses, that could result in breakage and visible impairment of the surface.

Cooling can be achieved for example by the discharge of a multitude of tiny jets from the assembly 30 arrayed across the upper surface 20A, or by an air-knife type arrangement (not shown) that consists of a continuous convergent slot through which high velocity air is blown directly on to the surface 20A at a steep angle with respect to the general direction of movement of the glass sheet 20. Arrows 32 approximate the flow stream of the cooling medium, whether by jets or air-knife, for contacting the surface 20A of the glass sheet 20.

A heating assembly 14 includes a source 34 of combustible fuel connected by a conduit 36 to a burner assembly 38, such as for example an oxy-fuel burner. Burner 38 provides a flame 40 with a footprint 42 to contact and thus heat the surface 20A of the glass sheet 20. Although the burner 38 could be constructed in a number of ways, a typical burner for use in this application may be a long body of rectangular or circular cross section containing an internal plenum (not shown) such that a uniform pressure is delivered across the plenum from the premixed fuel and oxygen entering the plenum and uniform heating is given across the width of the sheet. If desired a plurality of burners or burner assemblies may be employed.

A plenum discharge assembly having small holes or slots arranged across a side of the plenum oriented towards the glass sheet 20 may be used. Premixed fuel and oxygen are discharged through these holes at a velocity greater than the velocity at which the flame 40 can propagate back into the plenum. Were the velocity of the premixed fuel and oxygen issuing through the holes to be less than the velocity at which the flame can move through the flammable premixed fuel and oxygen, then the flame would move towards the holes, as the flame would be moving faster than the premixed fuel and oxygen. This situation where the flammable mixture is moving slower than the velocity at which the flame would propagate through said mixture could ultimately result in the flame passing through the holes and into the plenum chamber. This phenomenon is commonly termed as "flash-back" or "back-fire" and could result is the violent release of energy with potentially destructive consequences. Such occurrences are controlled by adopting of a combination of preventative measures such as but not limited to: ensuring the mixture cannot "flash-back"; the inclusion of flame arrestors or flash-back arrestors which are designed to extinguish the flame; pressure or explosion relief vents; minimizing of the volume of flammable gases enclosed by the system, i.e. the plenum and any mixing assembly; and by purging of the enclosure with inert gases.

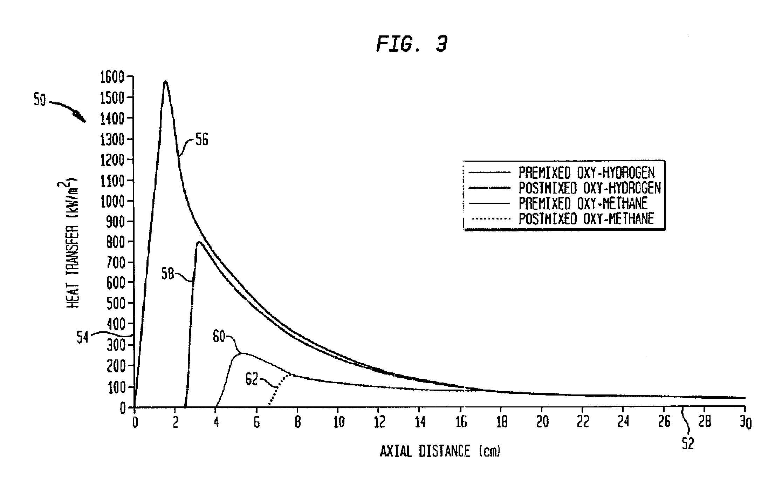

The burner assembly is typically lowered close to the glass surface 20A such that the peak heat flux as indicated and discussed below with respect to Figure 3 is located on the glass surface 20A and provides the maximum heating rate.

In operation, the cooling or chilling effect of the cooling medium spray 32 compensates for the high intensity flame 40 so that only the surface 20A is polished. This avoids the bulk of the glass sheet 20 underlying the surface 20A from being heated above its softening point so that the smooth planar characteristics of surface 20A and the glass sheet 20 are not compromised.

The cooling and heating elements are operated such that the elevated temperatures generated within the glass sheet only penetrate to a depth of a approximately one-third (1/3^{rd}) of the glass sheet thickness.

Figure 3 is a graphical representation shown generally at 50 of the heat transfer rates from different types of flames under consideration. The distance between a discharge end 44 of the burner 38 and the glass surface 20A is represented on the horizontal axis 52 (Axial distance) and the magnitude of the heat transferred is shown on the vertical axis 54 (Heat transfer). Figure 3 shows the heat transfer compared to flame distance from the glass for a premixed oxy-hydrogen flame 56, a postmixed oxy-hydrogen flame 58, a premixed oxy-methane flame 60 and a postmixed oxy-methane flame 62. As shown, a peak or maximum heat flux occurs at a certain distance from the glass surface 20A which is different in both magnitude and location for each type of flame. At closer or greater distances from the glass surface 20A than the peak heat flux, a smaller amount of heat would be transferred. For example, the premixed oxy-hydrogen flame generates a peak heat flux of nearly 1600 kW/m2 at a distance of approximately two (2) cm from the glass surface 20A. This is twice as great as the heat flux from the post mixed oxy-hydrogen flame, over five (5) times greater than a premixed oxy-methane flame and eight (8) times greater than a postmixed oxy-methane flame. The premixed oxy-hydrogen flame generates a noticeably higher heat flux than the other types of flames and as such, would be more effective in melting just the surface layer 20A of the glass 20 exposed to such a flame.

This improvement in glass surface quality allows a glass sheet produced with an unacceptably rough surface to be subsequently used in a number of processes that require smoother surfaces. Examples of this are improving the surface quality of rolled sheet glass to allow photovoltaic cells to be applied and of float glass to be used in LCD or PDP display glasses.

By application of flame polishing in accordance with the method and apparatus according to the present invention, any irregularities in the surface of the rolled glass sheet are reduced to the point where the glass surface is suitably smooth for the photovoltaic cells. By using the rolled glass process with subsequent flame polishing the cost and complexity of operating the tin bath in the float process is avoided. Furthermore by avoiding the need for a tin bath a smaller glass production facility becomes financially feasible.

It will be understood that the embodiments described herein are merely exemplary, and that a person skilled in the art may make many variations and modifications without departing from the spirit and scope of the invention. All such variations and modifications are intended to be included within the scope of the invention as described and claimed herein. It should be understood that embodiments described above are not only in the alternative, but may also be combined.

## Claims

1. Apparatus for polishing a glass sheet, comprising:
a cooling assembly disposed in a vicinity of the glass sheet and having a discharge member for discharging a cooling fluid medium to contact a surface of the glass sheet, and a heating assembly disposed for discharging heat for a selected amount of time to heat the surface of the glass sheet to a depth not more than one-third of the thickness of the glass sheet.

2. Apparatus according to claim 1, wherein the heating assembly is disposed downstream of the cooling assembly.

3. Apparatus according to claim 1 or claim 2, wherein the cooling assembly comprises a nozzle for dispensing the cooling fluid medium.

4. Apparatus according to claim 3, wherein the nozzle comprises a discharge outlet constructed and arranged to dispense the cooling fluid medium at an angle of less than 90° to the vertical with respect to a direction of movement of the glass sheet.

5. Apparatus according to any one of the preceding claims, wherein the heating assembly comprises a burner for discharging the heat as a flame to contact the surface of the glass sheet.

6. Apparatus according to claim 5, wherein the burner has a discharge end for the flame, the discharge end being from 0.5 to 30cm from the glass surface.

7. Apparatus according to claim 5 or claim 6, wherein the heating assembly comprises an oxy-fuel burner.

8. Apparatus according to any one of the preceding claims, further comprising a transport assembly for transporting the glass sheet from the cooling assembly to the heating assembly, the transport assembly selected from at least one of ceramic plates, conveyor belts, rollers, mesh belts, moving beds and moving plates.

9. A method for polishing a glass sheet, comprising:
cooling a surface of the glass sheet with a cooling fluid medium directed to the surface of the glass sheet for a first amount of time, and heating the surface of the glass sheet to a depth not more than one-third of the thickness of the glass sheet for a second amount of time.

10. A method according to claim 9, wherein the cooling comprises dispensing the cooling fluid medium at an angle less than 90° from the vertical with respect to a direction of movement of the glass sheet.

11. A method according to claim9 or claim 10, wherein the cooling fluid medium is selected from at least one of air, nitrogen and carbon dioxide gas.

12. A method according to any one of claims 9 to 11, wherein the heating comprises discharging a flame to contact the surface of the glass sheet.

13. A method according to claim 12, wherein the flame is selected from at least one of an oxy-methane tip-mixed flame, oxy-hydrogen tip-mixed flame, an oxy-methane premixed flame and an oxy hydrogen premixed flame.

14. A method according claim 12 or claim 13, wherein the heating is such that a depth not greater than one-third a thickness of the glass sheet is heated above the glass softening temperature.

15. A method according to any one of claims 9 to 14, wherein the selected amount of time is from 0.5 to 4 seconds.

16. A method according to claim 13, further comprising transporting the glass sheet from the cooling to the heating.

17. A method according to claim 16, wherein upstream of the cooling the glass sheet is withdrawn from a furnace.
